# EUROPÄISCHE PATENTSCHRIFT

(11) **EP 3 563 239 B1**
(45) Veröffentlichungstag und Bekanntmachung des Hinweises auf die Patenterteilung: **07.06.2023**
(21) Anmeldenummer: 18717935.3
(22) Anmeldetag: 18.04.2018
(51) Int. Cl.: G06F 9/54

(54) **ADAPTER FÜR DIE VERBINDUNG EINES EINGEBETTETEN SYSTEMS MIT EINEM BEDIENRECHNER UND VERFAHREN ZUM ANPASSEN EINES ADAPTERS**
ADAPTER FOR THE CONNECTION OF AN EMBEDDED SYSTEM WITH A CONTROL COMPUTER AND METHOD OF ADAPTING AN ADAPTER
ADAPTATEUR DE LIAISON D'UN SYSTÈME INTÉGRÉ COMPRENANT UN ORDINATEUR DE COMMANDE ET PROCÉDÉ D'ADAPTATION D'UN ADAPTATEUR

(30) Priorität: 28.04.2017 EP 17168710
(43) Veröffentlichungstag der Anmeldung: 06.11.2019
(73) Patentinhaber: dSPACE GmbH, 33102 Paderborn (DE)
(72) Erfinder: DRESSLER, Marc, 32805 Horn-Bad Meinberg (DE); SANDER, Thomas, 60385 Frankfurt (DE); MENKE, Günter, 59939 Olsberg (DE)
(86) Internationale Anmeldenummer: PCT/EP2018/059902
(87) Internationale Veröffentlichungsnummer: WO 2018/197299

(56) Entgegenhaltungen:
- EP-A1- 1 548 983
- WO-A1-2011/088878
- US-A1- 2013 117 769

## Beschreibung

Die Erfindung betrifft Adapter zum Verbinden eines eingebetteten Systems mit einem Bedienrechner und ein Verfahren zum Anpassen von derartigen Adaptern.

Eingebettete Systeme, also kompakte und energiesparende Rechner, die entsprechend der jeweiligen Anwendung über eine angepasste, häufig minimale, Schnittstelle mit der Umgebung wechselwirken, sind in vielen technischen Bereichen gebräuchlich. Hierbei kann es sich insbesondere um Steuergeräte handeln, die Parameter eines physikalischen Prozesses mit Hilfe eines oder mehrerer Sensoren messen und diesen physikalischen Prozess mittels eines oder mehrerer Aktoren beeinflussen.

Wenn ein neues Produkt entwickelt werden soll, findet häufig eine als Rapid Control Prototyping (RCP) bekannte Strategie Anwendung, bei der ein bestehendes Steuergerät in dem jeweiligen physikalischen Prozess eingesetzt wird, also beispielsweise einen Motor eines Kraftfahrzeugs ansteuert, und nur einzelne Funktionen bzw. Regelstrategien geändert werden. Bei diesem auch als Bypassing bekannte Vorgehen kann - sofern genügend Ressourcen auf dem Steuergerät verfügbar sind - die neue Regelstrategie direkt in dem Steuergerät berechnet werden (internes Bypassing) oder die Berechnung kann in einem externen Bedienrechner erfolgen, der häufig ein Vielfaches der Rechenleistung aber auch des Energiebedarfs eines üblichen Steuergeräts besitzt (externes Bypassing).

In beiden Fällen ist eine Schnittstelle erforderlich, über die Werte aus dem Steuergerät ausgelesen und/oder an dieses übergeben werden. Für bestimmte, häufig vorkommende Prozessorfamilien sind angepasste Adapter erhältlich. Beispielsweise ist aus der DE 102004027033 B4 ein Beeinflussungsgerät bekannt, welches über eine Steuergeräte-Debug-Schnittstelle mit einem Steuergerät und über eine Datenübertragungs-Schnittstelle mit einer Bedieneinheit wie einem Standard-PC verbunden ist.

Wenn ältere Steuergeräte und/oder Steuergeräte mit einem weniger gebräuchlichen Mikrocontroller eingesetzt werden, ist eine dedizierte Entwicklung der Schnittstelle für den jeweiligen Einzelfall erforderlich. Zu diesem Zweck müssen eine Vielzahl von Details des Steuergeräts ermittelt bzw. dem Entwickler des Adapters mitgeteilt werden. Selbst wenn diese Informationen ohne weiteres verfügbar wären, ist die Entwicklung doch mit einem erheblichen Aufwand an Zeit und Geld verbunden.

Aus der WO 2011/088878 A1 ist ein Verbindungsmodul zum Anbinden mindestens eines Geräts an ein Service-Oriented Architecture (SOA)-Netzwerk bekannt, wobei eine Funktionalität des mindestens einen Geräts als ein Dienst im SOA-Netzwerk abgebildet ist, das Verbindungsmodul mindestens eine erste Schnittstelle zum Anschluss des mindestens einen Geräts und mindestens eine zweite Schnittstelle zum Anschluss des SOA-Netzwerks aufweist, und das Verbindungsmodul ein Rechengerät zum Abarbeiten eines Computerprogramms aufweist. Ein Teil des abzuarbeitenden Computerprogramms ist standardmäßig vorgegeben und ein anderer Teil des Computerprogramms ist von einem Hersteller des mindestens einen Geräts frei programmierbar, um eine Anpassung einer auf dem mindestens einen Gerät vorhandenen Firmware an das SOA-Netzwerk zu realisieren. SOA erweitert das Konzept von WebServices zu einer Architektur für umfassende und Service basierende Anwendungen, die technische und fachliche Dienste in Form von lose gekoppelten Services bereitstellt. Anhand einer Definition des einzubindenden Systems wird ein Rahmen generiert, den der Hersteller des Geräts mit entsprechenden Funktionen im Quellcode füllt. Das Verbindungsmodul ermöglicht also eine Kapselung von Funktionen eines Gerätes ohne Know-How über Webservices. Servicebeschreibungen werden in einem Repository abgelegt, so dass beispielsweise über eine Funk-Übertragungsstrecke auf einen Sensor zugegriffen werden kann.

In der US 2013/0117769 A1 ist eine Struktur für eine anwendungsspezifische Schnittstelle (API) zur Anbindung von Sensoren an Cloud-basierte Anwendungen offenbart, bei der webbasierten Server-Anwendungen über das zentrale API auf Sensoren eines Mobilfunkgeräts zugreifen können. Dies erfolgt über einen gesonderten Sensor-Prozessor, der gegenüber dem Prozessor für Client-Anwendungen einen verringerten Stromgebrauch aufweist.

Bei Steuergeräten insbesondere in Kraftfahrzeugen gelten in der Regel harte Echtzeitanforderungen, bei denen die Reaktion auf einen neuen Sensorwert innerhalb einer vorgegebenen maximalen Latenz von beispielsweise einer Millisekunde erfolgen muss. Für das Bypassing resultiert daraus die Anforderung, dass der Datenaustausch in einem Bruchteil dieser Zeit erfolgen muss. Die Association for Standardization of Automation and Measuring Systems (ASAM) hat für das Bypassing ein universelles Mess- und Kalibrierprotokoll XCP definiert. Beispielsweise wurde am 1. Mai 2015 die Version ASAM MCD-1 XCP V1.3.0 veröffentlicht (vgl. www.asam.net). Zusätzliche Funktionen von neuen Versionen sind optional, so dass nachfolgende Versionen kompatibel bleiben. Das universelle Mess- und Kalibrierprotokoll kann auf verschiedenen Netzwerkschnittstellen aufsetzen, wie z.B. Ethernet. Allerdings ist eine individuelle Implementierung von XCP für die Verwendung mit einem älteren Steuergerät aufwändig und nicht kosteneffizient.

Aufgabe der vorliegenden Erfindung ist daher eine vereinfachte Bereitstellung von individuellen Adaptern. Insbesondere soll dem Nutzer die Möglichkeit gegeben werden, selbständig eine weitgehende Anpassung der vorhandenen Funktionalitäten vorzunehmen.

Diese Aufgabe wird erfindungsgemäß durch einen Adapter gemäß Anspruch 1 sowie durch ein Verfahren zum Konfigurieren eines Adapters gemäß Anspruch 11 gelöst. Vorteilhafte Ausgestaltungen der Erfindung sind Gegenstand von abhängigen Unteransprüchen.

Ein erfindungsgemäßer Adapter für die Verbindung eines eingebetteten Systems mit einem Bedienrechner, umfasst eine Standardschnittstelle, insbesondere eine Netzwerkschnittstelle, eine erste Teilschaltung und eine zweite Teilschaltung. Die erste Teilschaltung ist dazu eingerichtet, über die Standardschnittstelle, insbesondere nach einem Standard wie Ethernet oder IOCNET, mittels eines Standardprotokolls, vorzugsweise XCP, mit dem Bedienrechner zu kommunizieren. Über eine interne Schnittstelle ist die erste Teilschaltung mit der zweiten Teilschaltung verbunden, wobei die zweite Teilschaltung einen programmierbaren Rechenbaustein aufweist, der dazu konfiguriert ist, mindestens eine Elementar-Funktion aus der Gesamtmenge von Elementarfunktionen bereitzustellen, welche mittels eines Aufrufs über die interne Schnittstelle aufgerufen werden können. Die erste Teilschaltung ist dazu eingerichtet, einen oder mehrere über die interne Schnittstelle empfangenen Werte in ein Protokollformat des Standardprotokolls zu übersetzen, wobei die zweite Teilschaltung über eine Individualschnittstelle mit dem eingebetteten System verbunden werden kann. Erfindungsgemäß umfasst die erste Teilschaltung einen programmierbaren Logikbaustein und einen nichtflüchtigen Speicher, in dem eine feste Konfiguration des programmierbaren Logikbausteins hinterlegt ist, wobei die erste Teilschaltung dazu eingerichtet ist, eine über die Standardschnittstelle in dem Standardprotokoll angeforderte Protokollfunktionalität aus einer Menge von unterstützten Protokollfunktionalitäten in den Aufruf einer oder mehrerer Elementarfunktionen aus einer definierten Gesamtmenge von Elementarfunktionen zu übersetzen, und wobei die zweite Teilschaltung einen vom Nutzer beschreibbaren Speicher umfasst, in dem Binärcode des programmierbaren Rechenbausteins hinterlegt werden kann. Insbesondere kann die Implementierung mindestens einer Elementarfunktion vom Nutzer anpassbar sein.

Dadurch, dass der erfindungsgemäße Adapter in zwei Teilschaltungen aufgeteilt wird, kann die erste Teilschaltung unabhängig vom anzuschließenden eingebetteten System fest implementiert bzw. konfiguriert sein und muss nicht angepasst werden. Vorzugsweise umfasst die erste Teilschaltung eine vollständige Implementierung eines Standardprotokolls wie XCP. Bevorzugt bleibt die Bauteilbestückung der ersten Teilschaltung fest, und die zweite Teilschaltung weist elektrische Verbindungen auf, die eine Anpassung der auf der zweiten Teilschaltung angeordneten Bauteile ermöglichen.

Die zweite Teilschaltung kann vom Nutzer anhand einer vorgegebenen Spezifikation erstellt werden, welche Eigenschaften des programmierbaren Rechenbausteins und/oder der weiteren Bestückung bzw. Verschaltung der zweiten Teilschaltung definiert. Insbesondere kann für die zweite Teilschaltung eine Schaltungs-Spezifikation definiert sein, die vorzugsweise in einer textuellen oder binären Form weitergegeben und angepasst werden kann.

Damit, dass die erste Teilschaltung fest implementiert ist, soll insbesondere gemeint sein, dass ein Binärcode der ersten Teilschaltung in einem nichtflüchtigen Speicher hinterlegt ist und unabhängig von der Konfiguration der zweiten Teilschaltung unverändert bleibt. Mit Übersetzen ist hierbei ein Umsetzen einer Protokollfunktionalität in eine oder mehrere Elementarfunktionen gemeint, wobei vorzugsweise mindestens eine Elementar-Funktion beim Umsetzen von zwei oder mehr Protokollfunktionalitäten aufgerufen wird, so dass die Gesamtzahl von Elementarfunktionen gering gehalten werden kann. Zweckmäßigerweise sind die verschiedenen Elementarfunktionen bzw. die Gesamtzahl der Elementarfunktionen vordefiniert.

Die zweite Teilschaltung ist vorzugsweise anpassbar gestaltet und kann demgegenüber sowohl unterschiedliche Schaltungsbestandteile als auch an den konkreten Anwendungsfall angepassten Binärcode umfassen. Hierbei können eine oder mehrere Elementarfunktionen aus einer Gesamtzahl von Elementarfunktionen individuell in dem Binärcode implementiert werden. Es ist vorteilhaft, wenn die zweite Teilschaltung einen vom Nutzer beschreibbaren Speicher umfasst, in dem Binärcode zur Konfiguration des programmierbaren Rechenbausteins hinterlegt werden kann. Wenn die zweite Teilschaltung einen programmierbaren Rechenbaustein einer vorgegebenen Bauart enthält, kann die zweite Teilschaltung anhand einer vordefinierten Datei derart konfiguriert werden, dass alle Aufrufe einer definierten Funktionalität einen definierten Null- oder Fehlerwert liefern. Ein Nutzer kann die zweite Teilschaltung anpassen, um eine oder mehrere definierte Elementarfunktionen bereitzustellen, wobei diese vorzugsweise anhand von Bibliotheken erstellt werden. Somit ist es nur erforderlich, eine gewünschte Funktionalität zu definieren, aber nicht die vollständige Implementierung eines Standardprotokolls zu entwickeln. Bevorzugt stellt die Gesamtzahl von Elementarfunktionen eine Untermenge der im XCP-Standard definierten Protokollfunktionalitäten bereit. Wenn im konkreten Anwendungsfall nur einzelne Elementarfunktionen individuell implementiert werden, also die Anzahl von Funktionen gegenüber dem prinzipiell unterstützten Umfang an Protokollfunktionalitäten nochmals reduziert ist, kann der Aufwand für den Nutzer besonders gering gehalten werden.

Bei dem eingebetteten System handelt es sich um ein Steuergerät, für das auch die Bezeichnung Electronic Control Unit (ECU) gebräuchlich ist, und zwar ein Kraftfahrzeug-Steuergerät. Steuergeräte werden vielfach an die konkrete Aufgabenstellung angepasst, wobei ein verwendeter Mikrocontroller anhand möglichst geringer Kosten und benötigter Rechenleistung ausgewählt wird. Wird ein neues Steuergerät aufbauend auf einem bestehenden Entwurf entwickelt, so kann es auch vorgesehen sein, ältere Mikrocontroller mit individuellen Schnittstellen weiterzuverwenden.

Der Bedienrechner kann ein üblicher Nutzer-PC sein, sowohl als Laptop oder als Desktop ausgeführt, es kann sich aber auch um einen anwendungsspezifischen Rechner handeln, der beispielsweise hinsichtlich des zulässigen Temperaturbereichs für die Verwendung in einem Kraftfahrzeug ausgelegt ist. Insbesondere kann es sich bei dem Bedienrechner auch um ein spezielles RCP-System handeln. Die Standardschnittstelle, über die der Bedienrechner mit der ersten Teilschaltung verbunden ist, kann gemäß einem kabelgebundene oder kabellosen Ethernet-Standard gestaltet sein; zweckmäßigerweise kann es sich auch um einen herstellerspezifische Standard handeln, wie insbesondere IOCNET von dSPACE, der beispielsweise hinsichtlich der Echtzeitfähigkeit des Systems optimiert ist.

Der programmierbare Rechenbaustein kann als ein programmierbarer Logikbaustein (FPGA) und/oder als ein Mikroprozessor ausgeführt sein. Das Konfigurieren des programmierbaren Rechenbausteins erfolgt vorzugsweise mit Hilfe eines nichtflüchtigen Speichers, auf dem eine Konfiguration und/oder Programminstruktionen zum Ausführen der mindestens einen Funktionalität hinterlegt sind. Wenn die zweite Teilschaltung einen programmierbaren Logikbaustein umfasst, kann dieser beispielsweise anhand einer VHDL-Datei konfiguriert werden, der eine Schnittstellendefinition enthält. Hierbei ist es vorteilhaft, wenn eine Rückgabe eines Null- oder Fehlerwerts für nicht weiter implementierte Funktionen vordefiniert ist. Dies vereinfacht es, eine fest bleibende erste Teilschaltung zu verwenden; ein unerwünschter Aufruf einer nicht implementierten Protokollfunktionalität kann anhand des Null- oder Fehlerwerts auf Seiten des Bedienrechners ohne weiteres festgestellt werden.

Die Individualschnittstelle kann eine Pegelanpassung und einen individuellen Stecker umfassen; sie kann je nach dem im eingebetteten System verwendeten Mikrocontroller auf einem Standard wie JTAG oder Nexus aufsetzen und insbesondere proprietäre Erweiterungen des Standards umfassen.

Die interne Schnittstelle kann prinzipiell über eine beliebige physikalische Schnittstelle getunnelt werden. Somit kann hinsichtlich eines möglichst einfachen Schaltungsaufbaus oder eines möglichst großen erreichbaren Abstands zwischen erster und zweiter Teilschaltung optimiert werden.

Erfindungsgemäß umfasst die erste Teilschaltung einen programmierbaren Logikbaustein, der dazu eingerichtet ist, die Kommunikation mit einem Bedienrechner und/oder das Übersetzen einer in einem Standardprotokoll angeforderten Aktion in einen Aufruf einer oder mehrerer Elementarfunktionen durchzuführen. Weiterhin umfasst die erste Teilschaltung einen nichtflüchtigen Speicher, in dem eine feste Konfiguration des programmierbaren Logikbausteins hinterlegt ist. Die Verwendung von programmierbaren Logikbausteinen, insbesondere Field-Programmable Gate Arrays (FPGA) hat den Vorteil, dass eine für das jeweilige Protokoll optimale Implementierung bereitgestellt werden kann, und auch eine Parallelverarbeitung möglich ist. Die Konfiguration des programmierbaren Logikbausteins muss nur einmal vom Hersteller des Adapters für das gewünschte Protokoll erstellt werden. Die erste Teilschaltung kann begrenzt konfigurierbar gestaltet werden; insbesondere kann es vorgesehen sein, beim Initialisieren des programmierbaren Logikbausteins eine Auswahl zwischen mehreren hinterlegten Konfigurationen zu treffen. Die erste Teilschaltung kann dann also mit mehreren festen Varianten vorkonfiguriert sein.

Eine feste Konfiguration schließt es auch nicht aus, dass einzelne Parameter bzw. Flags gesetzt werden können, um Detailanpassungen vorzunehmen und beispielsweise Teilfunktionen ein- oder auszuschalten. Die Konfiguration des programmierbaren Logikbausteins kann in den verschiedenen Ausführungsformen auch aktivierbare Sonderfunktionen aufweisen, wie insbesondere eine Einheit zur Bearbeitung von Listen mit Messanforderungen. Gemäß dem XCP-Protokoll übergebene Listen mit DAQ-Messanforderungen (die Abkürzung DAQ steht für Data Acquisition) können dann in eine entsprechende Vielzahl von Aufrufen einer Einzelwertlesefunktionalität umgesetzt werden, wenn die individuelle Schnittstelle des eingebetteten Systems selbst keine Möglichkeit der Behandlung von Listen bietet. Hierbei sind die Sonderfunktionen zweckmäßigerweise fest in der Konfiguration implementiert und brauchen lediglich bei der Initialisierung des Adapters aktiviert zu werden.

Erfindungsgemäß ist die zweite Teilschaltung getrennt von der ersten Teilschaltung implementiert, wobei die zweite Teilschaltung einen eigenständigen programmierbaren Logikbaustein und/oder einen Mikrocontroller sowie einen Speicher umfasst, der eine Logik-Konfiguration und/oder Programmanweisungen enthält, um mindestens eine Elementarfunktion aus der Gesamtmenge von Elementarfunktionen bereitzustellen. Der Speicher kann nichtflüchtig ausgeführt sein, oder es kann jeweils bei der Initialisierung des Adapters eine Übertragung der Logik-Konfiguration über die interne Schnittstelle erfolgen, wenn beispielsweise die erste Teilschaltung einen hinreichend großen nichtflüchtigen Speicher aufweist. Dies ermöglicht eine flexible Wahl des auf der zweiten Teilschaltung eingesetzten Bausteins, wobei benötigte Rechenleistung, Platz- und Energiebedarf flexibel gegeneinander abgewogen werden können.

Erfindungsgemäß umfasst der Adapter zumindest zwei Platinen, zwischen denen mindestens ein flexibler Leiterangeordnet, wobei die erste Teilschaltung auf der ersten Platine und die zweite Teilschaltung auf der zweiten Platine implementiert ist. Der flexible Leiter kann insbesondere als Kabel bzw. Litze oder als flexibler Platinenbereich ausgeführt sein. Die dadurch ermöglichte räumliche Trennung der Teilschaltungen hat besonders dann Vorteile, wenn der Bauraum nahe des Steuergeräts begrenzt und/oder die Stromversorgung schwierig ist und/oder ungünstige Umgebungsbedingungen herrschen. Dann muss beispielsweise nur die zweite Teilschaltung in einem weiter ausgedehnten Betriebsbereich funktionsfähig sein oder ein besonders zuverlässig abgedichtetes Gehäuse aufweisen.

Es ist vorteilhaft, wenn der Adapter eine weitere Individualschnittstelle aufweist, insbesondere eine Sensorschnittstelle und/oder eine Ansteuerschaltung für einen Aktuator, und/oder dass der Adapter eine Bus-Schnittstelle aufweist, insbesondere für einen Automotive-Bus wie CAN, CAN-FD oder LIN. Die Ansteuerschaltung für einen Aktuator kann rein logische Ansteuersignale liefern oder auch eine auf der zweiten Teilschaltung angeordnete Leistungselektronik zum Betreiben des Aktuators umfassen. Wenn der Adapter eine Bus-Schnittstelle aufweist, können eine Vielzahl von Geräten angesprochen werden, so dass auch eine Gateway-Funktion implementiert werden kann.

Vorzugsweise umfasst der Adapter eine Zusatzschnittstelle, über die ein weiterer Rechner angeschlossen werden kann, wobei die mindestens eine bereitgestellte Elementarfunktion mittels eines Aufrufs über die Zusatzschnittstelle aktiviert werden kann. Ferner umfasst der Adapter eine Arbitrierungseinheit, welche dazu eingerichtet ist, einen Aufruf von der ersten Schnittstelle oder von der Zusatzschnittstelle an den programmierbaren Rechenbaustein zur Ausführung weiterzuleiten. Im einfachsten Fall kann die Arbitrierungseinheit wie ein Schalter mit oder ohne Vorzugsstellung realisiert sein; mit Vorzugsstellung ist hierbei gemeint, dass über eine erste Schnittstelle eingehende Aufrufe immer bevorzugt ausgeführt werden. Hierbei kann die Standardschnittstelle oder die Zusatzschnittstelle als erste Schnittstelle bevorzugt werden. Das Protokoll der Zusatzschnittstelle kann hierbei dem Protokoll der Standardschnittstelle entsprechen oder von diesem abweichen. Prinzipiell kann es also vorgesehen sein, für eine definierte Auswahl an Zusatzschnittstellen eine Übersetzung in eine oder mehrere Elementarfunktionen bereitzustellen. Der Aufwand für die Erstellung von Übersetzungsvorschriften fällt nur einmal für jedes Protokoll der Zusatzschnittstelle an. Dadurch, dass jeweils nur Elementarfunktionen aus der Gesamtmenge an Elementarfunktionen aufgerufen werden, erfordert die Unterstützung eines weiteren Protokolls bzw. einer weiteren Zusatzschnittstelle keine Änderungen an dem funktionalen Teil der zweiten Teilschaltung. Es kann vorgesehen sein, die Zusatzschnittstelle auf der ersten oder der zweiten Teilschaltung anzuordnen.

In einer besonders bevorzugten Ausführungsform der Erfindung umfasst die Arbitrierungseinheit mindestens einem Puffer und ist dazu eingerichtet, mehrere zeitlich überlappend eingehende Aufrufe von Funktionalitäten anhand mindestens einer vordefinierten Regel nacheinander auszuführen.

Die vordefinierte Regel kann insbesondere vorsehen, dass das Vorliegen einer Bedingung überprüft wird, um anhand dieses Kriteriums die gewünschte Priorisierung zu definieren. Beispielsweise kann eine Vorgabe von Zeit-Slots für die einzelnen Schnittstellen derart erfolgen, dass zyklisch für eine erste vorgegebene Zeitdauer die Standardschnittstelle Aufrufe senden kann und die Zusatzschnittstelle blockiert ist, bzw. für eine zweite Zeitdauer die Zusatzschnittstelle Aufrufe senden kann und die Standardschnittstelle blockiert ist. In einer alternativen Ausgestaltung kann es beispielsweise vorgesehen sein, dass Aufrufe von Funktionalitäten, welche über die Standardschnittstelle eingehen, immer eine höhere oder eine niedrigere Priorität aufweisen als Aufrufe von Funktionalitäten, welche über die Zusatzschnittstelle eingehen. Entsprechend kann man dies auch als eine Priorisierung anhand des jeweiligen Rechners sehen, da eine feste 1:1-Zuordnung zwischen Schnittstelle und Rechner besteht. Alternativ oder ergänzend kann es auch vorgesehen sein, die Priorität anhand der aufgerufenen Funktionalität zu wählen. Die Arbitrierungseinheit ist bevorzugt auf der zweiten Teilschaltung implementiert.

Gemäß einer ganz besonders bevorzugten Ausführungsform der Erfindung ist der Standardschnittstelle ein erster Puffer zugeordnet, und der Zusatzschnittstelle ist ein zweiter Puffer zugeordnet, wobei ein Aufruf einer Funktionalität in demjenigen Puffer gespeichert wird, welcher der Schnittstelle zugeordnet ist, über den der Aufruf der Funktionalität eingeht. Für den Fall, dass beide Puffer je mindestens einen Aufruf enthalten, wird der Aufruf einer Funktionalität zuerst ausgeführt, dem eine höhere Priorität zugeordnet wurde. Wenn die Priorität anhand der Schnittstelle, über den ein Aufruf einer Funktionalität eingeht, zugeordnet wird, kann es alternativ auch vorgesehen sein, nur der niedriger priorisierten Schnittstelle einen Puffer zuzuordnen.

Gemäß einer alternativen ganz besonders bevorzugten Ausführungsform der Erfindung weist die Arbitrierungseinheit einen Puffer für mehrere Funktionsaufrufe auf, wobei die in dem Puffer gespeicherten Aufrufe nach ihrer Position aufeinanderfolgend ausgeführt werden, und wobei neu eingehende Aufrufe anhand ihrer Priorität in den Puffer einsortiert werden, so dass Aufrufe mit einer hohen Priorität vor Aufrufen mit einer niedrigen Priorität ausgeführt werden. Der Puffer kann insbesondere als ein FIFO-Speicher (First in First Out) ausgeführt sein.

Die Erfindung betrifft weiterhin ein Rechnersystem umfassend ein eingebettetes System, einen Bedienrechner und einen erfindungsgemäßen Adapter, wobei das eingebettete System über den Adapter mit dem Bedienrechner verbunden ist, und wobei vorzugsweise die erste Teilschaltung des Adapters in dem Bedienrechner integriert ist.

Ferner wird ein Verfahren zum Anpassen eines erfindungsgemäßen Adapters bereitgestellt wobei der Adapter eine Standardschnittstelle, eine erste Teilschaltung und eine zweite Teilschaltung aufweist, wobei die erste Teilschaltung dazu eingerichtet ist, über die Standardschnittstelle, insbesondere nach einem Standard wie Ethernet oder IOCNET, mittels eines Standardprotokolls, insbesondere XCP, mit einem Bedienrechner zu kommunizieren, wobei die erste Teilschaltung ferner dazu eingerichtet ist, eine über die Standardschnittstelle in dem Standardprotokoll angeforderte Protokollfunktionalität aus einer Menge von unterstützen Protokollfunktionalitäten in den Aufruf einer oder mehrerer Elementarfunktionen aus einer definierten Gesamtmenge von Elementarfunktionen zu übersetzen, wobei die erste Teilschaltung über eine interne Schnittstelle mit einer zweiten Teilschaltung verbunden ist, wobei die zweite Teilschaltung eine vom Nutzer wählbare oder anpassbare Individualschnittstelle aufweist, wobei die zweite Teilschaltung einen programmierbaren Logikbaustein und/oder einen Mikrocontroller umfasst, und wobei die zweite Teilschaltung mindestens eine Elementarfunktion aus der definierten Gesamtmenge von Elementarfunktionen implementiert, wobei die Implementierung der mindestens einen Elementarfunktionen vom Nutzer anhand einer Bibliothek umfassend eine Vielzahl parametrierbarer Elementarfunktionen erstellt wird, wobei mindestens ein Parameter der mindestens einen Elementarfunktion vom Nutzer individuell gewählt und/oder mindestens eine Aktion der Elementarfunktion vom Nutzer hinzugefügt wird.

Der Begriff Parameter soll beliebige vom Nutzer vorgegebene Informationen umfassen, die eine Funktionalität genauer spezifizieren. So kann ein Parameter ein numerischer Wert, eine Speicheradresse, oder eine String-Konstante sein. Auch eine Binärsequenz oder ein Maschinenbefehl eines Prozessors des eingebetteten Systems können unter den Begriff Parameter fallen. Es kann auch vorgesehen sein, dass das Vorgeben einer Handlungssequenz mittels einer individuellen Wahl eines Parameters (der insbesondere auch eine Aufzählung der auszuführenden Aktionen enthält) erfolgen kann. Die mindestens eine Aktion der Elementar-Funktion kann eine logische oder arithmetische Operation oder eine Prozessorinstruktion des programmierbaren Rechenbausteins sein. Dadurch, dass die Implementierung der bereitgestellten Elementarfunktionen durch den Nutzer individuell erfolgt, werden beliebige Anpassungen an die konkrete Anwendung möglich.

Der Begriff Bibliothek soll hierbei auch den Fall einer vordefinierten Datei umfassen, beispielsweise eine VHDL-Datei, welche eine interne Schnittstelle definiert. Prinzipiell könnte auch eine Datei mit einer Netzliste verwendet werden. Zweckmäßigerweise liefert mindestens eine bereitgestellte Elementarfunktion ein von der angeschlossenen Hardware, wie dem eingebetteten System oder einem Sensor, abhängiges Ergebnis. Wenn Elementarfunktionen der Gesamtmenge von Elementarfunktionen in der konkreten Anwendung nicht bereitgestellt werden, so kann die vordefinierte Datei die Rückgabe eines festen Null- oder Fehler-Werts definieren.

Erfindungsgemäß ist die Bibliothek als eine Blockbibliothek in einer technischen Rechenumgebung ausgestaltet, welche dynamische Systeme mittels Blockdiagrammen simulieren kann, wobei die Blockbibliothek eine oder mehrere Elementarfunktionen in einer oder mehreren Implementierungen umfasst, und wobei der ausführbare Binärcode für den programmierbaren Logikbaustein und/oder Mikrocontroller der zweiten Teilschaltung zumindest teilweise aus einem Blockdiagramm automatisch erstellt wird. Beispielsweise kann eine grundlegend ähnliche Funktionalität in verschiedenen Varianten bzw. unterschiedlichen Funktionsumfängen angeboten werden. Indem der ausführbare Binärcode mittels eines Codegenerators aus einem Blockdiagramm erstellt wird, kann eine einmal getestete Funktionalität auf sämtlichen Hardwareplattformen verwendet werden, die von dem Codegenerator unterstützt sind.

Besonders bevorzugt bietet die Blockbibliothek zwei unterschiedliche Implementierungen einer gleichen oder vergleichbaren Funktionalität an, wobei die Art der Implementierung vom Nutzer in einer graphischen Benutzeroberfläche gewählt werden kann. Zweckmäßigerweise erfolgt die erste Implementierung mit Hilfe eines Mikroprozessors, und die zweite Implementierung ist als logische Schaltung in der Konfiguration eines programmierbaren Logikbausteins ausgestaltet. Ein Mikroprozessor kann zweckmäßigerweise auch als IP-Core auf einem programmierbaren Logikbaustein bzw. einem FPGA implementiert sein, und die Blockbibliothek kann für den konkreten IP-Core angepasste Software-Komponenten umfassen.

Es ist vorteilhaft, wenn die erste Teilschaltung als eine feste Konfiguration eines programmierbaren Logikbausteins ausgeführt ist, und die Bibliothek eine Definition der internen Schnittstelle in einer Hardwarebeschreibungssprache, insbesondere VHDL oder Verilog, enthält, wobei die zweite Teilschaltung zumindest teilweise anhand der Definition auf einem programmierbaren Logikbaustein implementiert wird.

Bevorzugt umfasst die Bibliothek für jede der Elementarfunktionen aus der Gesamtmenge definierter Elementarfunktionen eine Minimalimplementierung, wobei vorzugsweise die Minimalimplementierung keine vom Nutzer individuell anpassbaren Parameter aufweist, und wobei für jede nicht von dem Nutzer individuell implementierte Elementarfunktion die Minimalimplementierung auf der zweiten Teilschaltung bereitgestellt wird. Somit wird der Implementierungsaufwand des Nutzers für die jeweilige Anwendung minimiert.

Die Erfindung wird nachfolgend unter Bezugnahme auf die Zeichnungen näher erläutert. Hierbei werden gleichartige Teile mit identischen Bezeichnungen beschriftet. Die dargestellten Ausführungsformen sind stark schematisiert, d.h. die Abstände und die lateralen und die vertikalen Abmessungen sind nicht maßstäblich und weisen, sofern nicht anders angegeben, auch keine ableitbaren geometrischen Relationen zueinander auf.

Darin zeigt:
- Figur 1: ein erstes Ausführungsbeispiel eines Adapters,
- Figur 2: ein zweites Ausführungsbeispiel eines Adapters,
- Figur 3: eine schematische Ansicht eines Datenaustauschs mit einem Adapter,
- Figur 4: ein drittes Ausführungsbeispiel eines Adapters,
- Figur 5: ein viertes Ausführungsbeispiel eines Adapters, und
- Figur 6: eine schematische Darstellung der Konfiguration eines Adapters mit Hilfe von Bibliotheken.

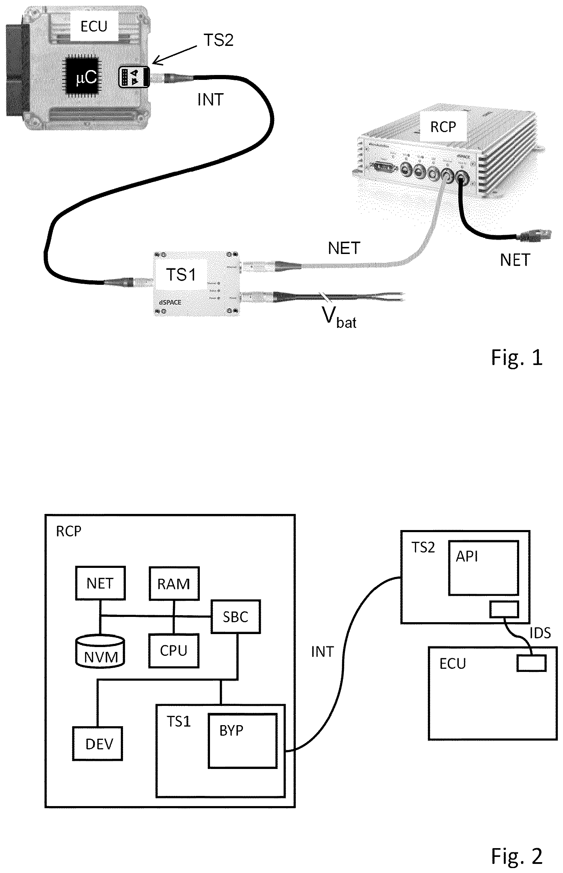

Die Abbildung der Figur 1 zeigt ein Rechnersystem mit einem ersten Ausführungsbeispiel eines erfindungsgemäßen Adapters.

Ein Bedienrechner RCP ist über eine Standardschnittstelle NET mit einer ersten Teilschaltung TS1 des Adapters verbunden. Die Standardschnittstelle NET kann als eine Netzwerkschnittstelle nach dem Ethernet-Standard ausgeführt sein, es kann aber auch ein Standard wie PCI Express oder eine Variante eines Standards verwendet werden, beispielsweise IOCNET. Zusätzlich weist die erste Teilschaltung eine Buchse für den Anschluss einer Versorgungsspannung V_{bat} auf. Alternativ kann es auch vorgesehen sein, dass die Stromversorgung des Adapters über die Standardschnittstelle NET erfolgt, um die Anzahl benötigter Leitungen zu verringern. Die erste Teilschaltung TS1 ist dazu eingerichtet, über ein Standardprotokoll wie XCP Messanforderungen und/oder Steuerbefehle des Bedienrechners RCP zu empfangen und diese in Aufrufe von vordefinierten Funktionalitäten zu übersetzen.

Über eine interne Schnittstelle INT ist die erste Teilschaltung TS1 mit einer zweiten Teilschaltung TS2 verbunden. Diese weist einen vom Nutzer definierten Funktionsumfang auf und kann somit gezielt an die konkrete Anwendung und insbesondere den anzuschließenden Mikrocontroller µC angepasst werden. Indem nur benötigte Funktionalitäten bereitgestellt werden, kann die zweite Teilschaltung TS2 energiesparend und kompakt ausgeführt sein, so dass sie zweckmäßigerweise direkt benachbart zu einem eingebetteten System wie dem Steuergerät ECU angeordnet werden kann und somit über die interne Schnittstelle INT oder einen Anschluss des Steuergeräts ECU mit Strom versorgt werden kann. Insbesondere kann die Individualschnittstelle derart gestaltet sein, dass die zweite Teilschaltung TS2 direkt auf das Steuergerät ECU aufgesteckt werden kann und somit nicht nur elektrisch, sondern auch mechanisch mit diesem verbunden ist, wobei sie zweckmäßigerweise gegen Umwelteinflüsse geschützt und derart ausgeführt ist, dass eine zuverlässige Funktion in einem weiten Temperaturbereich sichergestellt ist.

Bei dem gezeigten Beispiel kann der Bedienrechner RCP über eine weitere Standardschnittstelle NET mit einem Nutzer-PC wie einem Notebook verbunden werden.

In der Abbildung der Figur 2 ist zweites Ausführungsbeispiel eines erfindungsgemäßen Adapters gezeigt, bei dem der Adapter zumindest teilweise in einem Bedienrechner integriert ist.

Der Bedienrechner RCP weist mindestens einen Prozessor CPU, insbesondere einen Mehrkernprozessor oder mehrere Prozessoren, einen Arbeitsspeicher RAM und einen nichtflüchtigen Speicher NVM auf, auf dem vorzugsweise ein Betriebssystem und/oder ein Bootloader hinterlegt sind. Über einen Hochgeschwindigkeitsbus SBC bzw. einen entsprechenden Controller sind eine erste Teilschaltung TS1 des Adapters und eine Geräteschnittstelle DEV verbunden. Über die Geräteschnittstelle DEV können zweckmäßigerweise eine Vielzahl von nicht gezeigten Modulen angeschlossen werden, wie beispielsweise Schnittstellenkarten, die einen oder mehrere analoge oder digitale I/O-Kanäle bereitstellen. Die erste Teilschaltung TS1 umfasst zweckmäßigerweise einen programmierbaren Logikbaustein, insbesondere einen FPGA. Der programmierbare Logikbaustein umfasst zumindest eine (Teil-)Konfiguration BYP die dazu eingerichtet ist, um Messanforderungen in einem Standardprotokoll wie XCP zu empfangen und in Aufrufe von definierten Funktionalitäten zu übersetzen.

Die erste Teilschaltung TS1 ist über eine interne Schnittstelle INT mit einer zweiten Teilschaltung TS2 verbunden, welche zweckmäßigerweise hinsichtlich ihrer Individualschnittstelle IDS und der implementierten Funktionalitäten an die Eigenschaften des untersuchten Steuergeräts ECU und die geplanten Messungen angepasst ist. Die Individualschnittstelle IDS kann eine besonders gestaltete Buchse, einen individuellen Stecker oder eine Pfostenleiste aufweisen. Es kann auch vorgesehen sein, dass (wie grafisch angedeutet) die zweite Teilschaltung TS2 über ein Kabel mit dem Steuergerät ECU verbunden ist.

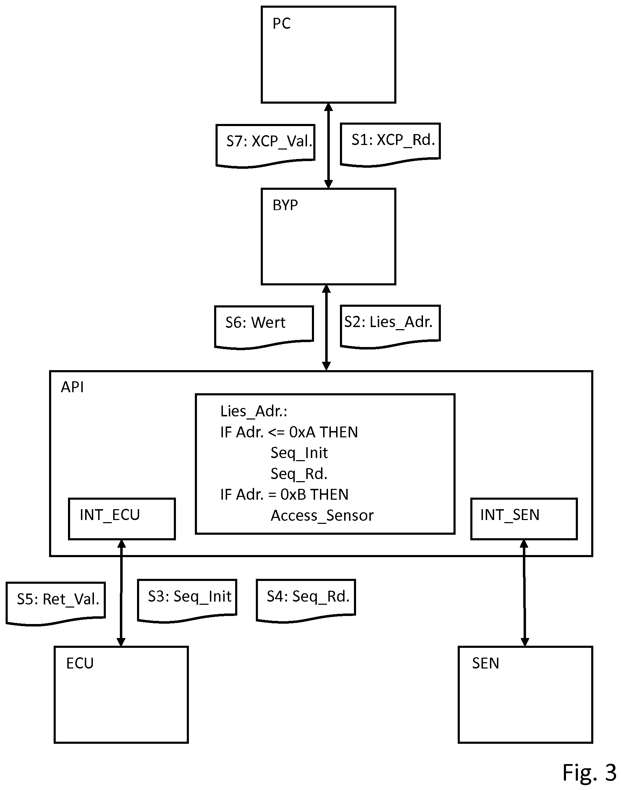

Die Abbildung der Figur 3 zeigt ein Beispiel eines Datenaustauschs mit einem erfindungsgemäßen Adapter, wobei nur die an der Kommunikation beteiligten Einheiten und ausgetauschte Daten bzw. Nachrichten schematisch dargestellt sind.

Ein Bedienrechner PC sendet XCP-Nachrichten an einen ersten Funktionsblock BYP, welche sie in Aufrufe von definierten Funktionalitäten übersetzt und diese an einen zweiten Funktionsblock API sendet. Ein Funktionsblock kann insbesondere als vollständige Konfiguration oder als Teil-Konfiguration eines programmierbaren Logikbausteins ausgeführt sein. Der zweite Funktionsblock API umfasst eine Individualschnittstelle INT_ECU zu einem Steuergerät ECU und eine weitere Individualschnittstelle INT_SEN, an der ein Sensor SEN angeschlossen ist.

Der zweite Funktionsblock API ist also an das Steuergerät ECU und den Sensor SEN angepasst und implementiert eine Auswahl von definierten Funktionalitäten. Beispielhaft dargestellt ist eine Funktionalität Lies_Adr. welche je nach übergebener Adresse ein Auslesen des Steuergeräts ECU oder des Sensors SEN ermöglicht.

Wenn beispielsweise ein Wert aus dem Steuergerät ECU ausgelesen werden soll, so sendet der Bedienrechner in Schritt S1 ein entsprechendes Kommando nach dem XCP-Standard, welches hier durch XCP_Rd. angedeutet ist. Der erste Funktionsblock BYP empfängt das Kommando und übersetzt es bei Schritt S2 in einen Aufruf der definierten Funktionalität Lies_Adr., welcher an den zweiten Funktionsblock API gesendet wird. Dieser setzt den Aufruf im vorliegenden Beispiel um, indem bei einem Aufruf der Funktion Lies_Adr. in einem ersten Adressbereich, für Adressen bis 0xA, in einem Schritt S3 ein erstes Signal Seq_Init und in einem weiteren Schritt S4 ein zweites Signal Seq_Rd. über die Individualschnittstelle INT_ECU an das Steuergerät ECU gesendet wird.

Die Signale können insbesondere individuellen Prozessorbefehlen, seien es reguläre Programminstruktionen oder Debug-Schnittstellen-Befehle, eines Mikroprozessors des Steuergeräts ECU entsprechen, woraufhin dieser die gewünschte Adresse ausliest und das Steuergerät ECU in Schritt S5 einen entsprechenden Rückgabewert Ret_Val. an den zweiten Funktionsblock API übergibt. Dieser kann den Wert extrahieren und eine Konversion in das passende Binärformat vornehmen, bevor in Schritt S6 der Rückgabewert Wert an den ersten Funktionsblock BYP übertragen wird. In Schritt S7 erzeugt diese die entsprechende XCP-Nachricht XCP_Val. und sendet ihn an den Bedienrechner PC.

Im gezeigten Beispiel kann es auch vorgesehen sein, dass der zweite Funktionsblock API, also insbesondere die zweite FPGA-Konfiguration, bei einem Lesen der Adresse 0xB einen aktuellen Ausgabewert des angeschlossenen Sensors SEN zurückliefert. Weiterhin kann es vorgesehen sein, dass der zweite Funktionsblock API dazu eingerichtet ist, in regelmäßigen Zeitabständen über die weitere Individualschnittstelle INT_SEN ein aktuelles Sensorsignal auszulesen und dieses auf die Erfüllung einer vorgegebenen Bedingung zu überprüfen. Wenn die Bedingung erfüllt ist, kann beispielsweise über den ersten Funktionsblock BYP, also insbesondere die erste FPGA-Konfiguration, eine XCP-Nachricht an den Bedienrechner PC gemeldet werden oder eine im ersten Funktionsblock BYP hinterlegte Befehlssequenz beispielsweise zum Abarbeiten einer Adressliste ausgeführt werden. Prinzipiell sind somit basierend auf den definierten Funktionalitäten auch komplexe Verhaltensmuster einfach realisierbar.

Insbesondere können die definierten Funktionalitäten eine oder mehrere der folgenden Funktionalitäten umfassen:
- Lesen eines Wertes, wobei die Adresse, von der gelesen wird, als Parameter wählbar ist,
   Beispielsweise kann ein Wert einer Variablen an der angegebenen Speicheradresse gelesen werden; es kann sich auch um eine gewandelte Eingabegröße eines Analog-Digital-Wandlers handeln, der über ein Memory-Mapped-Interface angebunden ist. Mit einem derartigen einfachen Lesezugriff können auf einfache Weise verschiedene Sensoren ausgelesen werden.
- Lesen mehrerer Werte, wobei die Adresse oder der Adressbereich und/oder die Anzahl aufeinanderfolgender Werte als Parameter wählbar ist/sind,
   Hierbei kann eine Liste mit Adressen, ein durch Startadresse und Blockgröße definierter Adressbereich und/oder alternativ auch ein durch Anfangs- und Endadresse spezifizierter Adressbereich beschrieben werden. Ein derartiger Block-Lese-Zugriff könnte so ausgestaltet werden, dass der Overhead für das interne Protokoll gering ist.
- Schreiben eines Wertes, wobei die Adresse, an die geschrieben wird, als Parameter wählbar ist,
   Neben dem Anpassen der Werte von im Speicher des Steuergeräts hinterlegten Parametern kann hiermit beispielsweise auch ein Ausgeben einer Spannung über einen Digital-Analog-Wandler bewirkt werden, welcher über ein Memory-Mapped-Interface angebunden ist.
- Schreiben mehrerer Werte, wobei der Adressbereich oder die Startadresse
   und die Anzahl der zu schreibenden Werte als Parameter wählbar ist/sind, Alternativ oder ergänzend zu einem Block-Schreib-Zugriff könnte auch ein Sequenz-Schreib-Zugriff vorgesehen sein, bei dem beispielsweise in vorgegebenen Zeitabstanden ein anderer Wert an dieselbe Adresse geschrieben wird. Unter Verwendung eines Digital-Analog-Wandlers kann daher mit geringem Aufwand ein Funktionsgenerator zum Ausgeben beliebiger Wellenformen bereitgestellt werden.
- Überwachen einer Adresse, wobei eine Adresse, die überwacht werden soll, als Parameter wählbar ist, und wobei ein Ereignis gemeldet und/oder ein an der Adresse anliegender Wert gelesen wird, wenn der an der Adresse anliegende Wert sich geändert hat.
   Die Meldung des Ereignisses kann bereits die Angabe des Werts enthalten, wenn die Individualschnittstelle beispielsweise eine an den Nexus-Standard angelehnte Trace-Schnittstelle umfasst. Abweichende Bitbelegungen können mit Hilfe einer Parametrierung der auf der zweiten Teilschaltung implementierten Individualschnittstelle berücksichtigt werden.
- Überwachen eines Adressbereichs, wobei mehrere Adressen, die überwacht werden sollen, als Parameter wählbar sind, insbesondere durch Angabe einer Startadresse und einer Endadresse.
   Wenn die Individualschnittstelle die Funktionalität einer Trace-Schnittstelle umfasst, können somit eine Vielzahl von geänderten Werten auf einfache Weise erfasst werden. Hierbei kann es vorgesehen sein, dass in der internen Schnittstelle eine Meldung von einzelnen Werten implementiert ist, und dass die erste Teilschaltung dazu eingerichtet ist, eine Vielzahl dieser Werte zu einer Liste zusammenzufassen, die gemäß dem XCP-Protokoll übergeben wird. Es kann auch vorgesehen sein, dass die zweite Teilschaltung eine Einheit zur Behandlung von Listen umfasst.
- Melden eines vordefinierten Wertes bei einem Aufruf einer vorgegebenen Adresse, wobei der Wert, der gemeldet werden soll, und die Adresse als Parameter wählbar sind,
   Eine derartige Funktionalität ermöglicht verschiedene Anwendungen: So könnte ein Wert "vorgetäuscht" werden, wenn beispielsweise eine Abfrage ein bestimmtes Ergebnis erfordert, aber an der entsprechenden Speicheradresse im Steuergerät ein abweichender Wert hinterlegt ist. Hierdurch könnte beispielsweise eine passende Versionsnummer an ein Software-Tool gemeldet werden. Alternativ oder ergänzend kann es auch vorgesehen sein, dass von dem Steuergerät gemeldet Werte zwischengespeichert werden und erst dann an den Bedienrechner übergeben werden, wenn eine entsprechende Leseanforderung auf der Standardschnittstelle eingeht.

In einer anderen Anwendung könnte der Programmablauf eines Prozessors bzw. Mikrokontrollers des Steuergeräts überwacht werden, und es erfolgt eine Meldung, wenn eine bestimmte Programmadresse ausgeführt wird. In diesem Fall würde der Aufruf der Adresse von dem Steuergerät ausgehen. Auch kann es vorgesehen sein, eine Adresse im Speicher zu überwachen und jeweils eine Meldung auszugeben, wenn der Mikrocontroller des Steuergeräts auf diese Adresse zugreift, um einen Wert zu lesen oder zu schreiben.
- Melden eines vordefinierten Ereignisses, wobei das Ereignis als Parameter wählbar ist, und/oder
   Die zweite Teilschaltung könnte somit dazu eingerichtet werden, in vorgegebenen Zeitabständen ein Ereignis zu erzeugen. Alternativ oder ergänzend kann es auch vorgesehen sein eine Adresse im Steuergerät zu überwachen, und eine Änderung des Werts als Ereignis zu melden und/oder den geänderten Wert zu ermitteln und an den Bedienrechner zu melden.
- Verwaltung des Status der mindestens einen Individualschnittstelle, insbesondere ein Initialisieren und/oder ein Auslesen des aktuellen Status der Individualschnittstelle.
   Dies ermöglicht es, einen Status des Steuergeräts auszulesen, um beispielsweise einen Fehlerzustand zu erkennen. Auch kann es vorgesehen sein, eine Statusänderung aktiv auszulösen, beispielsweise einen Reset des Steuergeräts. Falls die Individualschnittstelle des Steuergeräts eine Initialisierung erfordert, kann beispielsweise eine zu sendende Bit-Sequenz als Parameter übergeben werden.

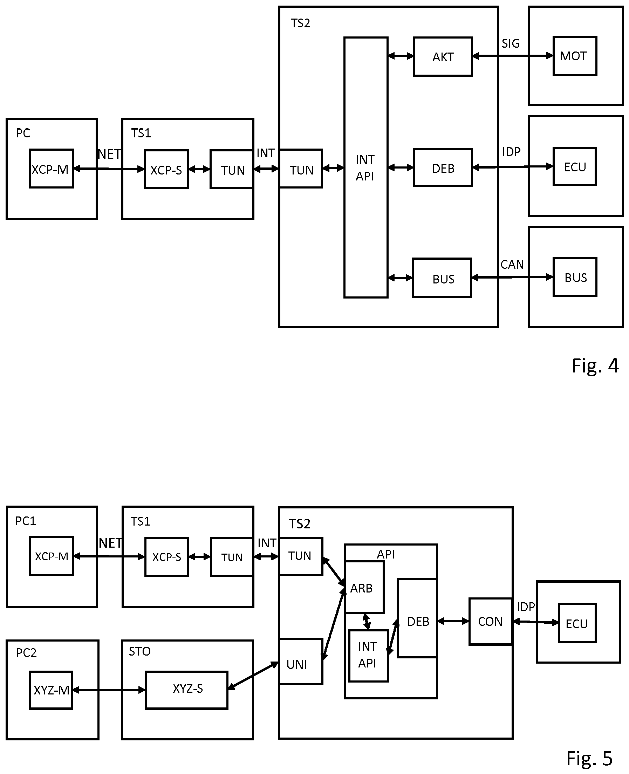

In der Abbildung der Figur 4 ist ein drittes Ausführungsbeispiel eines erfindungsgemäßen Adapters gezeigt, bei der mehrere externe Geräte über verschiedene Schnittstellen mit dem Adapter verbunden sind.

Der Adapter umfasst eine erste Teilschaltung TS1 und eine zweite Teilschaltung TS2, welche räumlich getrennt voneinander angeordnet sein können und über eine interne Schnittstelle INT verbunden sind. Die erste Teilschaltung TS1 ist über eine Standardschnittstelle NET mit einem Bedienrechner PC verbunden, wobei die Kommunikation im gezeigten Beispiel mittels des XCP-Protokolls erfolgt. Der Bedienrechner ist dazu eingerichtet, als XCP-Master XCP-M Kommandos an einen auf der ersten Teilschaltung TS1 angeordneten XCP-Slave XCP-S zu senden. Der XCP-Slave XCP-S zur Implementierung eines Standardprotokolls ist Bestandteil des in dieser Abbildung nicht gezeigten ersten Funktionsblocks BYP.

Die festgelegte interne Schnittstelle INT kann hierbei über verschiedene physikalische Schnittstellen TUN getunnelt werden, insbesondere serielle Schnittstellen wie LVDS (differentielle Signale niedriger Spannung), so dass trotz einer geringen Anzahl von Verbindungsleitungen eine hohe Übertragungsgeschwindigkeit möglich ist. Die zugrundeliegende physikalische Schnittstelle TUN ist sowohl auf der ersten als auch auf der zweiten Teilschaltung vorhanden. Sie kann zumindest teilweise in den ersten Funktionsblock BYP und/oder in den zweiten Funktionsblock API integriert sein; auf der jeweiligen Teilschaltung können aber auch beispielsweise Treiber-Bausteine zur Signalverstärkung oder ein Filter für empfangene Signale angeordnet sein.

Die zweite Teilschaltung TS2 umfasst mehrere individuell konfigurierte Schnittstellen, über die verschiedene externe Geräte angeschlossen sind. Die bereitgestellten Funktionen sind in dem zweiten Funktionsblock API implementiert. Dieser umfasst einen ersten Teilblock INT_API, welcher in dem gezeigten Beispiel mit einer Aktuatorschnittstelle AKT, einer Busschnittstelle BUS und einer Debugging-Schnittstelle DEB verbunden ist. Die Aktuatorschnittstelle AKT kann als eine digitale Schnittstelle zur reinen Ausgabe von Steuersignalen ausgestaltet sein; die zweite Teilschaltung TS2 kann aber auch zusätzliche Bauelemente umfassen, welche eine analoge Ansteuerung und Leistungsversorgung eines Aktuators ermöglicht, beispielsweise eines Elektromotors MOT. Die Debugging-Schnittstelle DEB kann weitgehend nach einem Standard-Protokoll wie Nexus ausgestaltet sein, aber eine abweichende Bitbelegung oder veränderte Funktionen aufweisen, je nach dem angeschlossenen Steuergerät ECU bzw. dessen Mikrocontroller oder allgemeiner dessen programmierbaren Rechenbausteins. Die Busschnittstelle BUS kann beispielsweise den CAN-, CAN-FD- oder LIN-Standard implementieren, so dass eine Vielzahl verschiedener Steuergeräte angeschlossen werden können.

Prinzipiell kann es auch vorgesehen sein, dass erste Teilschaltung TS1 und zweite Teilschaltung TS2 räumlich eng benachbart angeordnet sind und nicht nur elektrisch, sondern auch mechanisch verbunden sind, insbesondere über eine Pfostenleiste. Dann können vorzugsweise beide Teilschaltungen von einem gemeinsamen Gehäuse umschlossen sein.

Die Abbildung der Figur 5 zeigt ein viertes Ausführungsbeispiel eines erfindungsgemäßen Sensors, welches eine Zusatzschnittstelle zur Verbindung mit einem weiteren Bedienrechner aufweist.

Ein erster Bedienrechner PC1 umfasst einen XCP-Master XCP-M, der über eine Standardschnittstelle NET mit einem auf der ersten Teilschaltung TS1 angeordneten XCP-Slave XCP-S verbunden ist. Der XCP-Slave XCP-S ist Teil eines ansonsten nicht dargestellten ersten Funktionsblocks BYP, der über eine zugrundeliegende physikalische Schnittstelle TUN und eine interne Schnittstelle INT mit der zweiten Teilschaltung TS2 verbunden ist.

Auf der zweiten Teilschaltung TS2 ist ein zweiter Funktionsblock API angeordnet, welcher eine Arbitrierungseinheit ARB, einen generischen Funktionsteil INT_API sowie eine Debugging-Schnittstelle DEB umfasst. Prinzipiell könnte eine Vielzahl weiterer Individualschnittstellen mit dem generischen Funktionsteil INT_API verbunden sein, vorliegend ist zur Vereinfachung nur die Debugging-Schnittstelle DEB dargestellt. Neben dem zweiten Funktionsblock API, der vorzugsweise auf einem programmierbaren Logikbaustein implementiert ist, kann die zweite Teilschaltung TS2 zusätzliche Schaltungsteile aufweisen, die beispielsweise eine Signalkonvertierung durchführen. Im vorliegenden Beispiel ist eine Zusatzschaltung CON dargestellt, welche beispielsweise einen speziellen Stecker umfasst. Mittels der Zusatzschaltung CON ist die Debugging-Schnittstelle DEB über ein Individualprotokoll IDP mit dem Steuergerät ECU verbunden.

Weiterhin ist ein zweiter Bedienrechner PC2 dargestellt, der dazu konfiguriert ist, über eine Zugriffseinheit XYZ-M Anweisungen an einen Zusatzadapter STO mit einem Zugriffsempfänger XYZ-S zu senden. Der Zusatzadapter STO ist dazu eingerichtet, die empfangen Kommandos des Zugriffsprotokolls in Aufrufe vordefinierter Funktionalitäten zu konvertieren, wie diese auf dem zweiten Funktionsblock API implementiert sind. Über eine Zusatzschnittstelle erfolgt eine Verbindung mit der zweiten Teilschaltung, die eine Zusatzschnittstellenblock UNI umfasst. Der Zusatzschnittstellenblock UNI ist an den Zusatzadapter STO angepasst und dazu eingerichtet, eingehende Aufrufe von Funktionalitäten an die Arbitrierungseinheit ARB weiterzuleiten.

Die Arbitrierungseinheit ARB kann auf verschiedene Weisen realisiert sein und insbesondere nach unterschiedlichen Regeln priorisieren. So können beispielsweise Aufrufe, welche über die Standardschnittstelle eingehen, immer gegenüber den Aufrufen, welche über die Zusatzschnittstelle eingehen, bevorzugt werden. Es kann aber auch vorgesehen sein, dass nach der aufgerufenen Funktionalität priorisiert wird, oder dass jedem Bedienrechner ein zyklischer Zeitslot zugeordnet wird, in welchem nur Aufrufe dieses Bedienrechners weitergeleitet beziehungsweise bearbeitet werden. Auch eine Pufferung eingehender Aufrufe kann in der Arbitrierungseinheit ARB vorgesehen sein. Alternativ könnte es auch vorgesehen sein, das die auf der zweiten Teilschaltung angeordneten Schnittstellenblöcke, welche der physikalischen Schnittstelle TUN bzw. der Zusatzschnittstelle UNI zugeordnet sind, jeweils einen Puffer aufweisen.

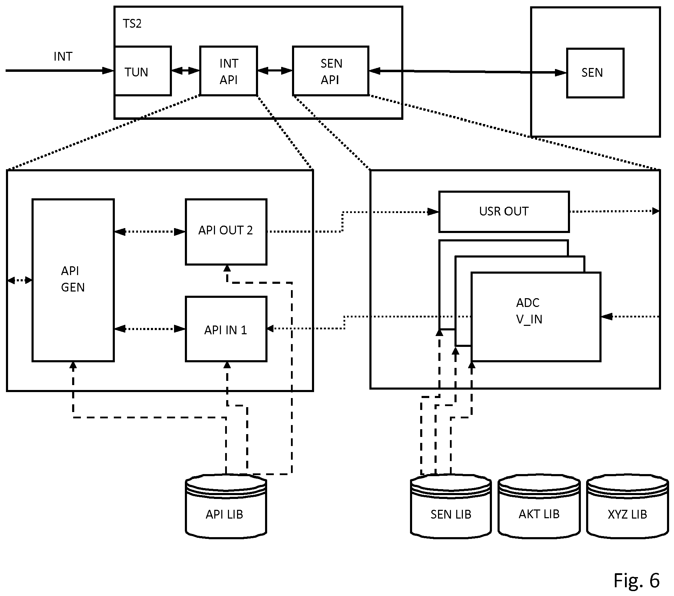

In der Abbildung der Figur 6 ist eine schematische Darstellung des Konfigurierens eines erfindungsgemäßen Adapters gezeigt, wobei die definierten Funktionalitäten der zweiten Teilschaltung TS2 zumindest teilweise anhand von Bibliotheken implementiert werden. Die erste Teilschaltung, welche zweckmäßigerweise nicht konfiguriert werden muss, ist nicht dargestellt.

Die zweite Teilschaltung TS2 empfängt Aufrufe von vordefinierten Funktionalitäten über die interne Schnittstelle INT und die zugrundeliegende physikalische Schnittstelle TUN. In dem gezeigten Beispiel sind die auf der zweiten Teilschaltung bereitgestellten Funktionalitäten mit Hilfe eines ersten Teilblocks INT_API und eines zweiten Teilblocks SEN_API implementiert. Die Teilblöcke sind auf der Abbildung zusätzlich in einer Detailansicht gezeigt und werden vorzugsweise als Teilkonfigurationen auf einem FPGA realisiert. In der Detailansicht ist ein Datenaustausch mit gepunkteten Pfeilen dargestellt.

Der erste Teilblock INT_API umfasst den allgemeinen Teil der Schnittstelle und ist zweckmäßigerweise anhand einer ersten Bibliothek API_LIB implementiert. Hierbei kann es sich auch um eine Blockbibliothek einer technischen Rechenumgebung handeln, mittels der ein Modell der gewünschten Funktionalität erstellt wird. Ein Codegenerator bzw. eine Build-Umgebung kann das Modell dann in einen ausführbaren Binärcode konvertieren. Der ausführbare Binärcode kann sowohl als Programminstruktionen eines Mikroprozessors als auch als Konfiguration eines programmierbaren Logikbausteins gestaltet sein. Prinzipiell ist es auch möglich, die Funktionalität auf einen Mikrocontroller und auf einen programmierbaren Logikbaustein zu verteilen, wenn beide vorhanden sind. Die erste Bibliothek API_LIB kann eine Vielzahl von Templates für vordefinierte Funktionalitäten umfassen, die anhand vom Nutzer vorgegebener Parameter anpassbar sind. Wenn das Template bzw. die Vorlage für einen konkreten Funktionsblock aus einer Bibliothek entnommen wurde, so ist dies in der Detailansicht durch gestrichelte Pfeile dargestellt.

Vorliegend umfasst der erste Teilblock INT_API einen generischen Schnittstellenblock API_GEN, der insbesondere die Aufrufe der verschiedenen Funktionalitäten empfängt und die entsprechenden Funktionsblöcke aktiviert. Hierbei kann der aktivierte Funktionsblock auch von Details des Aufrufs abhängen, z.B. der gewünschten Adresse eines Lesezugriffs. Zusätzlich kann der generische Schnittstellenblock API_GEN auch Puffer für eingehende Aufrufe und/oder ausgehende Daten enthalten. Das Lesen eines Werts an einer Adresse kann mithilfe eines Lese-Funktionsblocks API_IN_1 implementiert werden, der die Logik für das Lesen ohne eine eventuelle Pegelwandlung enthält. Ein Schreiben eines Werts an eine Adresse kann mithilfe eines generischen Schreib-Funktionsblocks API_OUT_2 erfolgen, der die Logik für das Schreiben ohne eine eventuelle Pegelwandlung enthält.

Die Adresse, von der gelesen wird, kann übergeben werden oder fest in dem Funktionsblock API_IN_1 konfiguriert sein. Dadurch kann der Nutzer wählen, ob ein Lese-Funktionsblock API_IN_1 für alle Lesezugriffe, insbesondere für das Lesen von verschiedenen Individualschnittstellen verwendet werden soll, oder ob ein Lese-Funktionsblock API_IN_x (x=1..n) für jede Adresse verwendet werden soll, auf die ein Lesezugriff prinzipiell möglich sein soll. Auch beliebige Zwischenstufen sind prinzipiell möglich. Durch die Verwendung einer Mehrzahl von Lese-Funktionsblöcken wird bei Verwendung eines programmierbaren Logikbausteins eine parallele Verarbeitung möglich, so dass eine Abwägung zwischen Geschwindigkeit und Flächen- bzw. Logikzellenbedarf getroffen werden kann. Entsprechend gilt dies auch für Schreib- oder andere Funktionsblöcke. Es ist zweckmäßig, wenn die Konfiguration der einzelnen Adressen automatisiert erfolgt, indem eine Beschreibungsdatei des anzuschließenden Steuergeräts ausgewertet wird, die eine Liste von Adressen und der zugeordneten Werte enthält. Hierbei kann es sich um eine an sich bekannte A2L-Datei oder eine XML-Datei mit Adressen und zugeordneten Eingabe-Ausgabe-Funktionen handeln.

Der zweite Teilblock SEN_API umfasst die verschiedenen Individualschnittstellen des Adapters, wobei im gezeigten Beispiel nur ein Sensors SEN angeschlossen ist. Zweckmäßigerweise werden eine Vielzahl von Templates bzw. Vorlagen für konkrete Individualschnittstellen in Bibliotheken bereitgestellt, insbesondere in Form einer Sensor-Anbindungs-Bibliothek SEN_LIB, einer Aktor-Anbindungs-Bibliothek Bibliothek AKT_LIB, oder allgemein einer Bibliothek XYZ_LIB für eine oder mehrere verschiedene Arten von Individualschnittstellen. Über einen Funktionsblock USR_OUT können Werte an den Sensor SEN ausgegeben werden, wobei eine Pegelwandlung oder andere erforderliche Signalkonvertierungen durchgeführt werden. Ein weiterer Funktionsblock ADC_V_IN dient dazu, die Ausgangsspannung des Sensors zu lesen und in einen Digitalwert zu wandeln. Prinzipiell kann eine Vielzahl der jeweiligen Funktionsblöcke verwendet werden, wie dies durch hinterlegte Blöcke angedeutet ist.

Dadurch, dass ein erfindungsgemäßer Adapter klar in Teilschaltungen und vorzugsweise in Funktionsblöcke strukturiert ist, können große Anteile der Funktionalitäten aus Bibliotheken übernommen werden, so dass der Nutzer nur einen geringen Anpassungsaufwand hat. Weiterhin bietet die erste, fertig konfigurierte Teilschaltung die Implementierung eines Standardprotokolls, so dass auf dem Bedienrechner eine Vielzahl von Standard-Software-Anwendungen für die Kommunikation eingesetzt werden können.

## Patentansprüche

1. Adapter für die Verbindung eines eingebetteten Systems (ECU), und zwar eines Kraftfahrzeug-Steuergeräts, mit einem Bedienrechner (RCP, PC), umfassend eine Standardschnittstelle (NET) eine erste Teilschaltung (TS1) und eine zweite Teilschaltung (TS2), wobei die erste Teilschaltung (TS1) dazu eingerichtet ist, über die Standardschnittstelle (NET) mittels eines Standardprotokolls mit dem Bedienrechner (RCP, PC) zu kommunizieren, wobei die erste Teilschaltung (TS1) über eine interne Schnittstelle (INT) mit der zweiten Teilschaltung (TS2) verbunden ist, wobei die zweite Teilschaltung (TS2) einen programmierbaren Rechenbaustein aufweist, der dazu konfiguriert ist, mindestens eine Elementarfunktion aus einer Gesamtmenge von Elementarfunktionen bereitzustellen, welche mittels eines Aufrufs über die interne Schnittstelle (INT) aufgerufen werden können, wobei die erste Teilschaltung (TS1) dazu eingerichtet ist, einen oder mehrere über die interne Schnittstelle (INT) empfangenen Werte in ein Protokollformat des Standardprotokolls zu übersetzen, wobei die zweite Teilschaltung (TS2) über eine Individualschnittstelle (IDS) mit dem eingebetteten System (ECU) verbunden werden kann, und wobei die zweite Teilschaltung (TS2) einen vom Nutzer beschreibbaren Speicher umfasst, in dem Binärcode des programmierbaren Rechenbausteins hinterlegt werden kann, **dadurch gekennzeichnet, dass** die erste Teilschaltung (TS1) einen programmierbaren Logikbaustein und einen nichtflüchtigen Speicher umfasst, in dem eine feste Konfiguration des programmierbaren Logikbausteins hinterlegt ist, wobei die erste Teilschaltung (TS1) dazu eingerichtet ist, eine über die Standardschnittstelle (NET) in dem Standardprotokoll angeforderte Protokollfunktionalität aus einer Menge von unterstützten Protokollfunktionalitäten in den Aufruf einer oder mehrerer Elementarfunktionen aus einer vordefinierten Gesamtmenge von Elementarfunktionen zu übersetzen, und dass
die zweite Teilschaltung (TS2) getrennt von der ersten Teilschaltung (TS1) implementiert ist, wobei die zweite Teilschaltung (TS2) als Rechenbaustein einen eigenständigen programmierbaren Logikbaustein und/oder einen Mikrocontroller umfasst, wobei der vom Nutzer beschreibbare Speicher eine Logik-Konfiguration und/oder Programmanweisungen enthält, um die mindestens eine Elementarfunktion aus der Gesamtmenge von Elementarfunktionen bereitzustellen, wobeider Adapter zumindest zwei Platinen umfasst, zwischen denen mindestens ein flexibler Leiter angeordnet ist, wobei die erste Teilschaltung (TS1) auf der ersten Platine und die zweite Teilschaltung (TS2) auf der zweiten Platine implementiert ist.

2. Adapter nach einem der vorhergehenden Ansprüche, **dadurch gekennzeichnet, dass** die Bauteilbestückung der ersten Teilschaltung (TS1) fest bleibt, und dass die zweite Teilschaltung (TS2) elektrische Verbindungen aufweist, die eine Anpassung der auf der zweiten Teilschaltung angeordneten Bauteile ermöglichen.

3. Adapter nach einem der vorhergehenden Ansprüche, **dadurch gekennzeichnet, dass** dieser eine weitere Individualschnittstelle (IDS) aufweist, insbesondere eine Sensorschnittstelle und/oder eine Ansteuerschaltung für einen Aktuator, und/oder dass dieser eine Bus-Schnittstelle aufweist.

4. Adapter nach einem der vorhergehenden Anschlüsse, **dadurch gekennzeichnet, dass** dieser eine Zusatzschnittstelle umfasst, über die ein weiterer Rechner angeschlossen werden kann, wobei die mindestens eine bereitgestellte Elementarfunktion mittels eines Aufrufs über die Zusatzschnittstelle aktiviert werden können, ferner umfassend eine Arbitrierungseinheit, welche dazu eingerichtet ist, einen Aufruf von der ersten Schnittstelle oder von der Zusatzschnittstelle an den programmierbaren Rechenbaustein zur Ausführung weiterzuleiten.

5. Adapter nach Anspruch 4, **dadurch gekennzeichnet, dass** die Arbitrierungseinheit mindestens einem Puffer umfasst und dazu eingerichtet ist, mehrere zeitlich überlappend eingehende Aufrufe von Funktionalitäten anhand mindestens einer vordefinierten Regel nacheinander auszuführen.

6. Adapter nach Anspruch 5, **dadurch gekennzeichnet, dass** entweder der Standardschnittstelle ein erster Puffer zugeordnet ist und der Zusatzschnittstelle ein zweiter Puffer zugeordnet ist, wobei ein Aufruf einer Funktionalität in demjenigen Puffer gespeichert wird, welcher der Schnittstelle zugeordnet ist, über den der Aufruf der Funktionalität eingeht, wobei für den Fall, dass beide Puffer je mindestens einen Aufruf enthalten, der Aufruf einer Funktionalität zuerst ausgeführt wird, dem eine höhere Priorität zugeordnet wurde, oder dass die Arbitrierungseinheit einen Puffer für mehrere Funktionsaufrufe aufweist, wobei die in dem Puffer gespeicherten Aufrufe nach ihrer Position aufeinanderfolgend ausgeführt werden, und wobei neu eingehende Aufrufe anhand ihrer Priorität in den Puffer einsortiert werden, so dass Aufrufe mit einer hohen Priorität vor Aufrufen mit einer niedrigen Priorität ausgeführt werden.

7. Adapter nach einem der vorhergehenden Ansprüche, **dadurch gekennzeichnet, dass** die definierten Funktionalitäten eine oder mehrere der folgenden Funktionalitäten umfassen:
Lesen eines Wertes, wobei die Adresse, von der gelesen wird, als Parameter wählbar ist,
Lesen mehrerer Werte, wobei der Adressbereich oder die Adressliste als Parameter wählbar ist,
Schreiben eines Wertes, wobei die Adresse, an die geschrieben wird, als Parameter wählbar ist,
Schreiben mehrerer Werte, wobei der Adressbereich oder die Adressliste als Parameter wählbar ist,
Überwachen einer Adresse, wobei eine Adresse, die überwacht werden soll, als Parameter wählbar ist, und wobei ein Ereignis gemeldet und/oder ein an der Adresse anliegender Wert gelesen wird, wenn der an der Adresse anliegende Wert sich geändert hat,
Überwachen eines Adressbereichs, wobei mehrere Adressen, die überwacht werden sollen, als Parameter wählbar sind, insbesondere durch Angabe einer Startadresse und einer Endadresse.
Melden eines vordefinierten Wertes bei einem Aufruf einer vorgegebenen Adresse, wobei der Wert, der gemeldet werden soll, und die Adresse als Parameter wählbar sind,
Melden eines vordefinierten Ereignisses, wobei das Ereignis als Parameter wählbar ist, und/oder
Verwaltung des Status der mindestens einen Individualschnittstelle, insbesondere ein Initialisieren und/oder ein Auslesen des aktuellen Status der Individualschnittstelle.

8. Rechnersystem umfassend ein eingebettetes System (ECU), einen Bedienrechner (RCP, PC) und einen Adapter nach einem der vorhergehenden Ansprüche, wobei das eingebettete System (ECU) über den Adapter mit dem Bedienrechner (RCP, PC) verbunden ist, und wobei vorzugsweise die erste Teilschaltung (TS1) des Adapters in dem Bedienrechner (RCP, PC) integriert ist.

9. Verfahren zum Anpassen eines Adapters nach einem der Ansprüche 1 bis 7, der eine Standardschnittstelle (NET), eine erste Teilschaltung (TS1) und eine zweite Teilschaltung (TS2) aufweist, wobei die zweite Teilschaltung (TS2) eine vom Nutzer wählbare oder anpassbare Individualschnittstelle (IDS) aufweist, wobei die zweite Teilschaltung (TS2) einen programmierbaren Logikbaustein und/oder einen Mikrocontroller umfasst, **dadurch gekennzeichnet, dass** die erste Teilschaltung (TS1) einen programmierbaren Logikbaustein und einen nichtflüchtigen Speicher umfasst, in dem eine feste Konfiguration des programmierbaren Logikbausteins hinterlegt ist, wobei die erste Teilschaltung (TS1) dazu eingerichtet ist, eine über die Standardschnittstelle (NET) in dem Standardprotokoll angeforderte Protokollfunktionalität aus einer Menge von unterstützen Protokollfunktionalitäten in den Aufruf einer oder mehrerer Elementarfunktionen aus einer definierten Gesamtmenge von Elementarfunktionen zu übersetzen, und wobei die zweite Teilschaltung (TS2) mindestens eine Elementarfunktion aus der definierten Gesamtmenge von Elementarfunktionen implementiert, wobei die Implementierung der mindestens einen Elementarfunktionen vom Nutzer anhand einer Bibliothek umfassend eine Vielzahl parametrierbarer Elementarfunktionen erstellt wird, wobei mindestens ein Parameter der mindestens einen Elementar-Funktion vom Nutzer individuell gewählt und/oder mindestens eine Aktion der Elementarfunktion vom Nutzer hinzugefügt wird, wobei
die Bibliothek als eine Blockbibliothek in einer technischen Rechenumgebung ausgestaltet ist, welche dynamische Systeme mittels Blockdiagrammen simulieren kann, wobei die Blockbibliothek eine oder mehrere Elementarfunktionen in einer oder mehrerer Implementierungen umfasst, und wobei der ausführbare Binärcode für den programmierbaren Logikbaustein und/oder Mikrocontroller der zweiten Teilschaltung anhand eines Codegenerators zumindest teilweise aus einem Blockdiagramm automatisch erstellt wird.

10. Verfahren nach Anspruch 9, **dadurch gekennzeichnet, dass** die Blockbibliothek zwei unterschiedliche Implementierungen einer gleichen oder vergleichbaren Funktionalität anbietet, wobei die Art der Implementierung vom Nutzer in einer graphischen Benutzeroberfläche der technischen Rechenumgebung gewählt werden kann, wobei die erste Implementierung mit Hilfe eines Mikroprozessors erfolgt, und wobei die zweite Implementierung als logische Schaltung in der Konfiguration eines programmierbaren Logikbausteins erfolgt.

11. Verfahren nach einem der Ansprüche 9 bis 10, **dadurch gekennzeichnet, dass** die erste Teilschaltung als eine feste Konfiguration eines programmierbaren Logikbausteins ausgeführt ist, und dass die Bibliothek eine Definition der internen Schnittstelle in einer Hardwarebeschreibungssprache enthält, wobei die zweite Teilschaltung zumindest teilweise anhand der Definition auf einem programmierbaren Logikbaustein implementiert wird.

12. Verfahren nach einem der Ansprüche 9 bis 11, **dadurch gekennzeichnet, dass** die Bibliothek für jede der Elementarfunktionen aus der Gesamtmenge definierter Elementarfunktionen eine Minimalimplementierung umfasst, wobei vorzugsweise die Minimalimplementierung keine vom Nutzer individuell anpassbaren Parameter aufweist, und dass für jede nicht von dem Nutzer individuell implementierte Elementarfunktion die Minimalimplementierung auf der zweiten Teilschaltung bereitgestellt wird.

## Claims

1. An adapter for connecting an embedded system (ECU), namely a motor vehicle control device, to a workstation (RCP, PC), comprising a standard interface (NET), a first partial circuit (TS1), and a second partial circuit (TS2), the first partial circuit (TS1) being set up for communicating with the workstation (RCP, PC) via the standard interface (NET) by means of a standard protocol, the first partial circuit (TS1) being connected to the second partial circuit (TS2) via an internal interface (INT), the second partial circuit (TS2) comprising a programmable calculating block configured for providing at least one elementary function from an overall set of elementary functions able to be invoked via the internal interface (INT) by means of a call, the first partial circuit (TS1) being set up for translating one or more values received via the internal interface (INT) into a protocol format of the standard protocol, the second partial circuit (TS2) being able to be connected to the embedded system (ECU) via an individual interface (IDS), and the second partial circuit (TS2) comprising a memory writeable by the user in which binary code of the programmable calculating block can be saved, **characterized in that** the first partial circuit (TS1) comprises a programmable logic device and a non-volatile memory in which a fixed configuration of the programmable logic device is saved, wherein the first partial circuit (TS1) is set up for translating a protocol functionality from a plurality of supported protocol functionalities requested in the standard protocol via the standard interface (NET) into the call of one or more elementary functions from a predefined overall set of elementary functions, and **in that**
the second partial circuit (TS2) is implemented separately from the first partial circuit (TS1), wherein the second partial circuit (TS2) as a calculating block comprises an independent, programmable logic device and/or a microcontroller, wherein the memory writeable by the user comprises a logic configuration and/or program instructions for providing the at least one elementary function from the overall set of elementary functions, wherein the adapter comprises at least two boards, at least one flexible conductor being disposed between the same, wherein the first partial circuit (TS1) is implemented on the first board and the second partial circuit (TS2) is implemented on the second board.

2. The adapter according to the preceding claim,
**characterized in that** the component population of the first partial circuit (TS1) remains fixed, and **in that** the second partial circuit (TS2) comprises electrical connections enabling adapting the components disposed on the second partial circuit.

3. The adapter according to any one of the preceding claims, **characterized in that** said adapter comprises a further individual interface (IDS), particularly a sensor interface and/or a driver circuit for an actuator, and/or that said adapter comprises a bus interface.

4. The adapter according to any one of the preceding claims, **characterized in that** said adapter comprises an additional interface by means of which a further computer can be connected, wherein the at least one elementary function provided can be activated by means of a call via the additional interface, further comprising an arbitrating unit set up for forwarding a call from the first interface or from the additional interface to the programmable calculating block for executing.

5. The adapter according to claim 4, **characterized in that** the arbitrating unit comprises at least one buffer and is set up for sequentially executing a plurality of calls of functionalities received at overlapping times by means of at least one predefined rule.

6. The adapter according to claim 5, **characterized in that** either the standard interface is associated with a first buffer and the additional interface is associated with a second buffer, wherein a call of a functionality is saved in the particular buffer associated with the interface by means of which the call of the functionality is received, wherein for the case that at least one call is present in each of the two buffers, the call of a functionality with which a higher priority has been associated is executed first, or
**in that** the arbitrating unit comprises a buffer for a plurality of function calls, wherein the calls saved in the buffer are executed sequentially according to the position thereof, and wherein newly received calls are sorted into the buffer by means of the priority thereof, so that calls having a higher priority are executed prior to calls having a lower priority.

7. The adapter according to any one of the preceding claims, **characterized in that** the defined functionalities comprise one or more of the following functionalities:
reading a value, wherein the address from which said value is read can be selected as a parameter,
reading a plurality of values, wherein the range of addresses or the address list can be selected as a parameter,
writing a value, wherein the address to which said value is written can be selected as a parameter,
writing a plurality of values, wherein the range of addresses or the address list can be selected as a parameter,
monitoring an address, wherein an address to be monitored can be selected as a parameter, and wherein an event is reported and/or a value present at the address is read when the value present at the address has changed,
monitoring an address range, wherein a plurality of addresses to be monitored can be selected as a parameter, particularly by indicating a starting address and an ending address,
reporting a predefined value when a specified address is called, wherein the value to be reported and the address can be selected as parameters,
reporting a predefined event, wherein the event can be selected as a parameter, and/or
managing the status of the at least one individual interface, particularly initializing and/or reading out the current status of the individual interface.

8. A computer system comprising an embedded system (ECU), a workstation (RCP, PC), and an adapter according to any one of the preceding claims, the embedded system (ECU) being connected to the workstation (RCP, PC) by means of the adapter, and the first partial circuit (TS1) of the adapter preferably being integrated in the workstation (RCP, PC).

9. A method for adapting an adapter according to any one of the claims 1 through 7 comprising a standard interface (NET), a first partial circuit (TS1), and a second partial circuit (TS2), the second partial circuit (TS2) comprising an individual interface (IDS) selectable or adjustable by the user, the second partial circuit (TS2) comprising a programmable logic device and/or a microcontroller, **characterized in that** the first partial circuit (TS1) comprises a programmable logic device and a non-volatile memory in which a fixed configuration of the programmable logic device is saved, wherein the first partial circuit (TS1) is set up for translating a protocol functionality from a set of supported protocol functionalities requested in the standard protocol via the standard interface (NET) into the call of one or more elementary functions from a defined entire set of elementary functions, and wherein the second partial circuit (TS2) implements at least one elementary function from the defined entire set of elementary functions, wherein the implementing of the at least one elementary function is created by the user by means of a library comprising a plurality of parameterizable elementary functions, wherein at least one parameter of the at least one elementary function is selected individually by the user and/or at least one action of the elementary function is added by the user, wherein
the library is implemented as a block library in a technical computer environment able to simulate dynamic systems by means of block diagrams, wherein the block library comprises one or more elementary functions in one or more implementations, and wherein the executable binary code for the programmable logic device and/or microcontroller of the second partial circuit is created at least partially automatically from a block diagram by means of a code generator.

10. The method according to claim 9, **characterized in that** the block library provides two different implementations of one identical or comparable functionality, wherein the type of implementing can be selected by the user in a graphic user interface of the technical computer environment, wherein the first implementing takes place by means of a microprocessor, and wherein the second implementing takes place as a logical circuit in the configuration of a programmable logic device.

11. The method according to any one of the claims 9 through 10, **characterized in that** the first partial circuit is implemented as a fixed configuration of a programmable logic device, and **in that** a definition of the internal interface in a hardware-describing language is present in the library, wherein the second partial circuit is implemented on a programmable logic device at least partially by means of the definition.

12. The method according to any one of the claims 9 through 11, **characterized in that** the library comprises one minimal implementation for each of the elementary functions from the entire set of defined elementary functions, wherein the minimal implementation preferably does not comprise any parameters able to be adapted individually by the user, and **in that** the minimal implementation is provided on the second partial circuit for each elementary function not implemented individually by the user.

## Revendications

1. Adaptateur pour la connexion d'un système incorporé (ECU), à savoir un appareil de commande de véhicule à moteur, avec un ordinateur de commande (RCP, PC), comprenant une interface standard (NET), un premier circuit partiel (TS1) et un deuxième circuit partiel (TS2), le premier circuit partiel (TS1) étant conçu pour communiquer avec l'ordinateur de commande (RCP, PC) par l'intermédiaire de l'interface standard (NET) au moyen d'un protocole standard, le premier circuit partiel (TS1) étant relié au deuxième circuit partiel (TS2) par l'intermédiaire d'une interface interne (INT), le deuxième circuit partiel (TS2) présentant un module de calcul programmable qui est configuré pour fournir au moins une fonction élémentaire à partir d'un ensemble total de fonctions élémentaires qui peuvent être lancées au moyen d'un appel via l'interface interne (INT), le premier sous-circuit (TS1) étant configuré pour transcrire une ou plusieurs valeurs reçues via l'interface interne (INT) dans un format de protocole du protocole standard, le deuxième circuit partiel (TS2) pouvant être relié au système incorporé (ECU) par l'intermédiaire d'une interface individuelle (IDS), et le deuxième circuit partiel (TS2) comprenant une mémoire inscriptible par l'utilisateur, dans laquelle peut être stocké un code binaire du module de calcul programmable, **caractérisé en ce que** le premier sous-circuit partiel (TS1) comprend un composant logique programmable et une mémoire non-volatile dans laquelle est stockée une configuration invariable du composant logique programmable, le premier circuit partiel (TS1) étant conçu pour transcrire une fonctionnalité de protocole demandée par l'intermédiaire de l'interface standard (NET) dans le protocole standard, issue d'un ensemble de fonctionnalités de protocole prises en charge, en l'appel d'une ou de plusieurs fonctions élémentaires dans un ensemble total prédéfini de fonctions élémentaires, et **en ce que**
le deuxième circuit partiel (TS2) est mis en œuvre séparément du premier circuit partiel (TS1), le deuxième circuit partiel (TS2) comprenant en tant que module de calcul un composant logique programmable autonome et/ou un microcontrôleur, la mémoire inscriptible par l'utilisateur contenant une configuration logique et/ou des instructions de programme pour mettre à disposition la, au moins une, fonction élémentaire à partir de l'ensemble total de fonctions élémentaires, l'adaptateur comprenant au moins deux platines entre lesquelles est disposé au moins un conducteur flexible, le premier circuit partiel (TS1) étant mis en œuvre sur la première platine et le deuxième circuit partiel (TS2) étant mis en œuvre sur la deuxième platine.

2. Adaptateur selon la revendication précédente, **caractérisé en ce que** la dotation en composants du premier circuit partiel (TS1) reste invariable, et **en ce que** le deuxième circuit partiel (TS2) comporte des connexions électriques permettant une adaptation des composants disposés sur le deuxième circuit partiel.

3. Adaptateur selon l'une quelconque des revendications précédentes, **caractérisé en ce que** celui-ci présente une autre interface individuelle (IDS), en particulier une interface à capteur et/ou un circuit de commande pour un actionneur, et/ou **en ce que** celui-ci présente une interface de bus.

4. Adaptateur selon l'une quelconque des revendications précédentes, **caractérisé en ce que** celui-ci comprend une interface supplémentaire par l'intermédiaire de laquelle un autre ordinateur peut être connecté, la, au moins une, fonction élémentaire fournie pouvant être activée par appel par l'intermédiaire de l'interface supplémentaire, comprenant en outre une unité d'arbitrage qui est conçue pour transmettre, pour exécution, un appel de la première interface ou de l'interface supplémentaire au module de calcul programmable.

5. Adaptateur selon la revendication 4, **caractérisé en ce que** l'unité d'arbitrage comprend au moins un tampon et est conçue pour exécuter successivement plusieurs appels de fonctionnalités se chevauchant dans le temps à l'aide d'au moins une règle prédéfinie.

6. Adaptateur selon la revendication 5, **caractérisé en ce que** soit un premier tampon est attribué à l'interface standard et un deuxième tampon est attribué à l'interface supplémentaire, un appel d'une fonctionnalité étant mémorisé dans le tampon qui est attribué à l'interface par laquelle est reçu l'appel de la fonctionnalité, sachant que, dans le cas où les deux tampons contiennent chacun au moins un appel, l'appel d'une fonctionnalité auquel une priorité plus élevée a été attribuée est exécuté en premier, ou
**que** l'unité d'arbitrage présente un tampon pour plusieurs appels de fonction, les appels mémorisés dans le tampon étant exécutés successivement selon leur position, et les nouveaux appels entrants étant classés dans le tampon en fonction de leur priorité, de sorte que des appels ayant une priorité élevée sont exécutés avant les appels ayant une priorité basse.

7. Adaptateur selon l'une quelconque des revendications précédentes, **caractérisé en ce que** les fonctionnalités définies comprennent une ou plusieurs des fonctionnalités suivantes :
lecture d'une valeur, l'adresse à partir de laquelle la lecture est effectuée pouvant être sélectionnée en tant que paramètre,
lecture de plusieurs valeurs, la plage d'adresses ou la liste d'adresses pouvant être sélectionnée en tant que paramètre,
écriture d'une valeur, l'adresse à laquelle l'écriture est effectuée pouvant être sélectionnée en tant que paramètre,
écriture de plusieurs valeurs, la plage d'adresses ou la liste d'adresses pouvant être sélectionnée en tant que paramètre,
surveillance d'une adresse, une adresse qui doit être surveillée pouvant être sélectionnée en tant que paramètre, et un événement étant signalé et/ou une valeur appliquée à l'adresse étant lue lorsque la valeur figurant à l'adresse a changé,
surveillance d'une plage d'adresses, plusieurs adresses qui doivent être surveillée pouvant être sélectionnées en tant que paramètres, en particulier par spécification d'une adresse de début et d'une adresse de fin.
signalisation d'une valeur prédéfinie dans le cas d'un appel à une adresse prédéfinie, la valeur à signaler et l'adresse pouvant être sélectionnées en tant que paramètres,
signalisation d'un événement prédéfini, l'évènement pouvant être sélectionné en tant que paramètre, et/ou
gestion de l'état de l'au moins une interface individuelle, en particulier une initialisation et/ou une lecture de l'état actuel de l'interface individuelle.

8. Système d'ordinateur comprenant un système incorporé (ECU), un ordinateur de commande (RCP, PC) et un adaptateur selon l'une quelconque des revendications précédentes, dans lequel le système incorporé (ECU) est relié à l'ordinateur de commande (RCP, PC) par l'intermédiaire de l'adaptateur, et dans lequel le premier circuit partiel (TS1) de l'adaptateur est intégré dans l'ordinateur de commande (RCP, PC).

9. Procédé pour adapter un adaptateur selon l'une quelconque des revendications 1 à 7, qui comprend une interface standard (NET), un premier circuit partiel (TS1) et un deuxième circuit partiel (TS2), le deuxième circuit partiel (TS2) comprenant une interface individuelle (IDS) sélectionnable ou adaptable par l'utilisateur, le deuxième circuit partiel (TS2) comprenant un composant logique programmable et/ou un microcontrôleur, **caractérisé en ce que** le premier circuit partiel (TS1) comprend un composant logique programmable et une mémoire non-volatile dans laquelle est stockée une configuration invariable du composant logique programmable, le premier circuit partiel (TS1) étant conçu transcrire une fonctionnalité de protocole demandée via l'interface standard (NET) dans le protocole standard, issue d'un ensemble de fonctionnalités de protocole prises en charge, en l'appel d'une ou de plusieurs fonctions élémentaires d'un ensemble total défini de fonctions élémentaires, et dans lequel le deuxième circuit partiel (TS2) met en œuvre au moins une fonction élémentaire d'un ensemble total défini de fonctions élémentaires, la mise en œuvre de la, au moins une, fonction élémentaire étant créée par l'utilisateur à l'aide d'une bibliothèque comprenant une pluralité de fonctions élémentaires paramétrables, au moins un paramètre de la, au moins une, fonction élémentaire étant sélectionné individuellement par l'utilisateur et/ou au moins une action de la fonction élémentaire étant ajoutée par l'utilisateur, sachant que
la bibliothèque est conçue comme une bibliothèque de blocs dans un environnement de calcul technique, qui peut simuler des systèmes dynamiques au moyen de diagrammes en blocs, la bibliothèque de blocs comprenant une ou plusieurs fonctions élémentaires dans une ou plusieurs mises en oeuvre, et le code binaire exécutable pour le composant logique programmable et/ou le microcontrôleur du deuxième circuit partiel étant créé automatiquement au moins en partie à partir d'un diagramme en blocs à l'aide d'un générateur de code.

10. Procédé selon la revendication 9, **caractérisé en ce que** la bibliothèque de blocs offre deux implémentations différentes d'une fonctionnalité identique ou comparable, le type d'implémentation pouvant être choisi par l'utilisateur dans une interface utilisateur graphique de l'environnement de calcul technique, la première implémentation étant réalisée à l'aide d'un microprocesseur, et la deuxième implémentation étant réalisée sous forme de circuit logique dans la configuration d'un composant logique programmable.

11. Procédé selon l'une quelconque des revendications 9 à 10, **caractérisé en ce que** le premier circuit partiel est réalisé sous la forme d'une configuration invariable d'un composant logique programmable, et **en ce que** la bibliothèque contient une définition de l'interface interne dans un langage de description de matériel, le deuxième circuit partiel étant mis en œuvre au moins en partie à l'aide de la définition sur un composant logique programmable.

12. Procédé selon l'une quelconque des revendications 9 à 11, **caractérisé en ce que** la bibliothèque comprend une mise en œuvre minimale pour chacune des fonctions élémentaires de l'ensemble total des fonctions élémentaires définies, la mise en œuvre minimale ne comportant de préférence pas de paramètres adaptables par l'utilisateur, et **en ce que** pour chaque fonction élémentaire non implémentée individuellement par l'utilisateur, la mise en œuvre minimale est fournie sur le deuxième circuit partiel.
